# EUROPEAN PATENT APPLICATION

(11) **EP 1 396 464 A1**
(43) Date of publication of application: **10.03.2004**
(21) Application number: 03019230.6
(22) Date of filing: 26.08.2003
(51) Int. Cl.: B66F 9/075, B60K 17/16

(54) **An improved axle for vehicles, in particular for lift trucks and the like**

(30) Priority: 03.09.2002 IT PD20020224
(71) Applicant: CARRARO S.P.A., I-35011 Campodarsego (Padova) (IT)
(72) Inventor: Cesaroni, Antonio Francisco, 35010 Vigodarzere (PD) (IT)
(74) Representative: Fabris, Stefano (IT)

(57) **Abstract**

An axle for vehicles, in particular for lift trucks, comprising a differential gear (7) unit having a crown wheel and pinion gear arrangement (8, 9) at the drive input in the differential gear unit, and a reduction gear unit (14) which is kinematically interposed between the crown wheel and pinion gear arrangement (8, 9) and the differential gear unit (7).

## Description

The present invention relates to an axle for vehicles, in particular for lift trucks, according to the preamble of principal claim 1.

In the specific technical field of lift trucks, the use of conventionally configured axles is generally a selection which is a compromise with respect to the specific requirements for such applications.

These requirements include, for example, that of providing a short distance between the flange for the drive input in the differential unit and the longitudinal axis of the axle, a requirement which conflicts with the dimensions of the crown wheel and pinion which are necessary to bring about the desired transmission relationship.

Another requirement encountered is that of limiting in these axles the swinging actions of the truck owing to the play of the kinematic chains of the transmission in the braking phase which is normally provided on the high-speed transmission shafts. These swinging actions are unacceptable when loads are suspended on the lift truck.

Another requirement is to form in a central zone of the axle the spaces required by the dimensions of the pivoting device of the fork-lift structure of the truck.

A main object of the invention is to improve the architecture of the axle in order to increase the compatibility with the structure and the obstructions typically encountered in assemblies of conventionally configured lift trucks.

This object and others, which are set out below, are achieved by the invention by means of an axle for vehicles, in particular for lift trucks, which is produced according to the appended claims.

The features and advantages of the invention will be better appreciated from the detailed description below of one preferred embodiment which is illustrated purely by way of non-limiting example with reference to the appended drawings, in which:
- Figure 1 is an axially sectioned view of an axle according to the present invention,

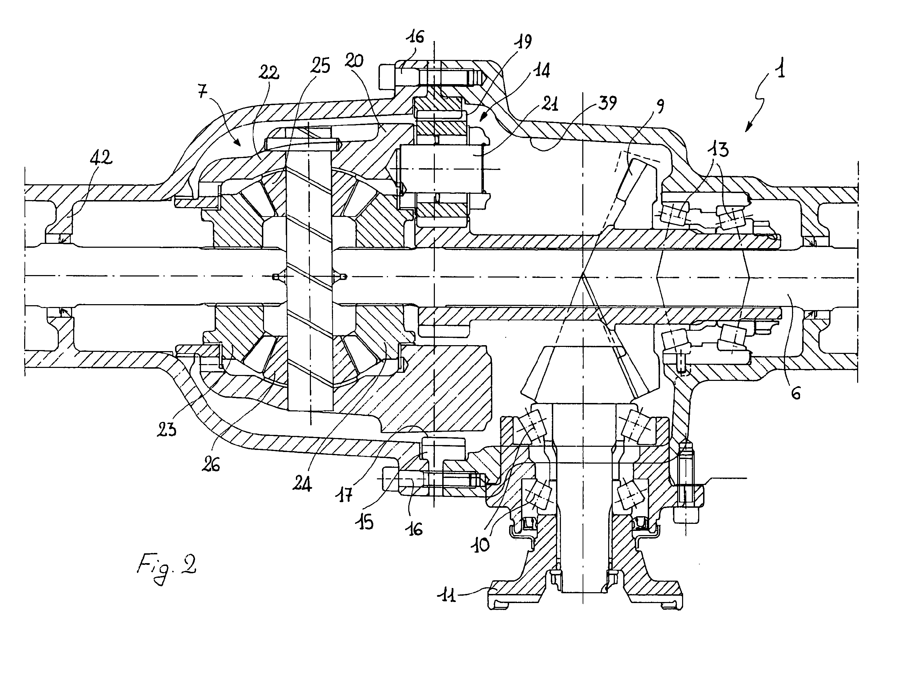

- Figure 2 is an axially sectioned partial view of a detail of the axle of the preceding Figure,

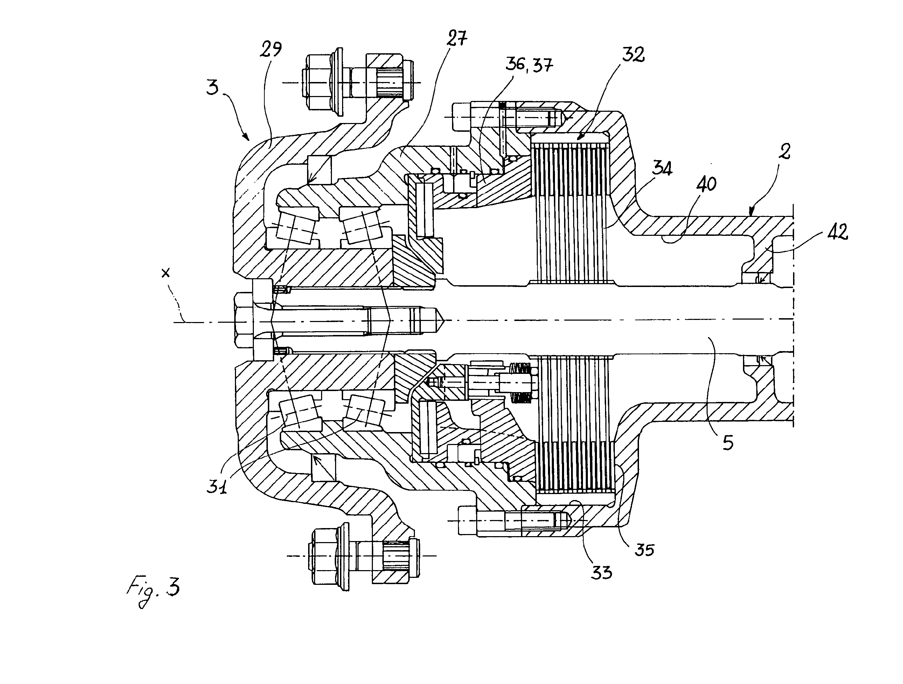

- Figure 3 is an axially sectioned partial view of another detail of the axle of Figure 1.

In the Figures, an axle for vehicles is generally indicated 1, for example, a front axle of an operating machine, such as a lift truck, which axle is produced according to the present invention.

The axle 1 comprises a box-shaped beam 2 which constitutes the casing for the transmission elements, to the axially opposite ends of which beam 2 wheel hubs generally indicated 3, 4 are connected.

A half-shaft 5, 6 (with axis of rotation X) is provided for each wheel hub 3, 4. Each half-shaft is rotatingly supported in the beam 2 and can transmit the drive which is taken up from the output of a differential gear train, generally indicated 7.

In the differential gear unit 7, the drive is introduced by means of a crown wheel and pinion gear arrangement having a bevel pinion 8 and a crown wheel 9 which are mutually engaged.

The pinion 8 is rotatingly supported in the beam 2 by means of bearings 10 and can be connected to a drive shaft, which is not illustrated, by means of a flange 11. The crown wheel 9 is keyed to a hollow shaft 12 which is rotatingly supported in the beam 2 by means of bearings 13.

According to a principal feature of the invention, a speed reduction gear unit, generally indicated 14, is kinematically interposed between the differential gear unit 7 and the crown wheel and pinion arrangement 8, 9.

The reduction gear unit 14 is of the epicyclic type and comprises an external ring gear 15 which is fixed by means of screws 16 in a position between two flanged portions of the beam 2. The ring gear 15 has an internal set of teeth 17 and is part of an epicyclic mechanism which further comprises a sun gear 18 and a plurality of planetary gears 19. The sun gear 18 is coaxially connected to (preferably formed in one piece with) an axial end of the hollow shaft 12 which therefore constitutes the high-speed shaft of the reduction gear 14.

The planetary gears 19 are mounted freely rotatably on a satellite carrier 20 which includes pins 21, on which the gears are rotatingly supported with bearings optionally being interposed. Advantageously, the satellite carrier 20 is formed in a portion of a box-shaped element 22 which in turn constitutes the casing of the differential gear 7. Advantageously, the differential gear casing 22 and the satellite carrier portion 20 are formed in one piece as a single casting only.

The differential gear casing 22 houses two planetary gears 23, 24 which are keyed onto half-shafts 5, 6 of the axle as well as two or more satellite gears 25, 26 in engagement with the planetary gears 23, 24.

Therefore, the satellite carrier 20 constitutes the low-speed shaft of the reduction gear unit 14 and is the drive input shaft in the differential gear unit 7.

It should be noted that the differential gear unit 7 and the reduction gear unit 14 are advantageously arranged in a central zone of the axle near the flange 11 for connecting the drive shaft to the axle. This positioning allows more space to be saved at the opposite axial ends of the axle, in which there are the largest obstructions associated with the connection device of the lifting forks.

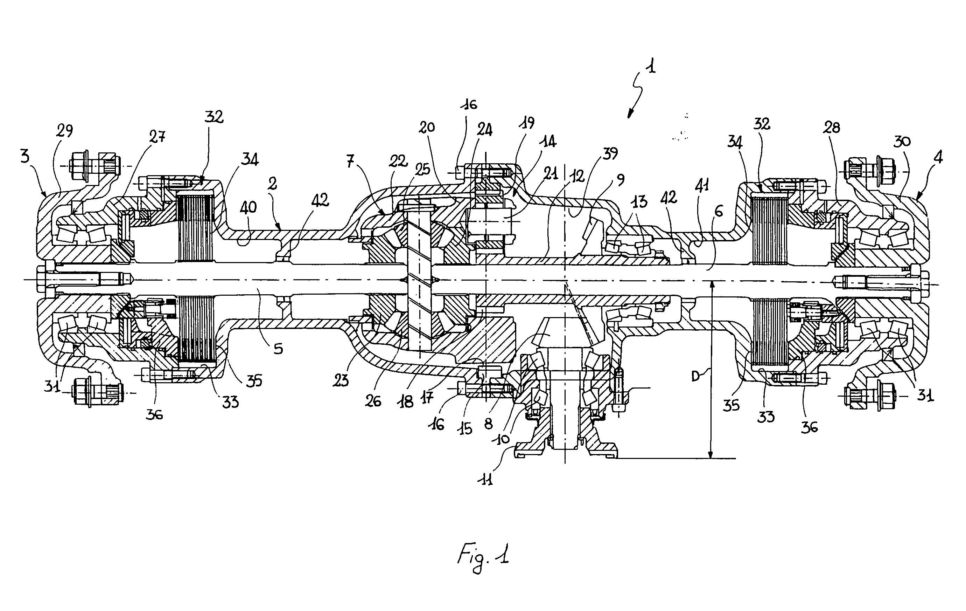

The provision of the reduction gear unit 14 downstream of the crown wheel and pinion further allows the dimensions of the crown wheel and pinion 8, 9 to be reduced for a given final reduction ratio. The distance, indicated D in Figure 1, between the flange 11 and the longitudinal axis X of the axle is thus reduced.

At the axial ends of the axle 1, each wheel hub 3, 4 comprises a stationary portion 27, 28 which is the portion by which each hub is connected to the beam 2, and a rotating portion 29, 30 which is supported on the stationary portion 27, 28 at the outer side thereof by means of bearings, generally indicated 31.

The axle 1 is further provided, for each wheel hub 3, 4, with a brake unit 32 which acts on the corresponding half-shaft 5, 6.

Each brake unit 32 comprises a bell-like portion 33 which is formed in one piece in the beam 2 and which is joined to the stationary portion of the respective wheel hub, and an assembly of discs 34 which are rotationally secured to the corresponding half-shaft 5, 6 and counter-discs 35 which are joined to the bell-like portion 33. Each brake unit 32 further comprises a hydraulic actuator having an annular piston 36 which can slide in a sealing manner in a seat 37 of the bell-like portion 33 as well as a resilient biasing mechanism which includes an assembly of cup springs or helical springs 38 which can bias the piston into a non-operating position.

It should be noted that the provision of each brake unit acting directly on the respective half-shaft of the transmission to the wheel hub allows the play present in the kinematic chains of the transmission (in particular in the reduction gear) to be greatly reduced. Advantageously, in braking phases, the swinging actions of the loads suspended on the truck owing to any play of the kinematic chains are thus substantially limited.

There is further provision for the delimitation in the box-shaped casing, which is defined inside the beam 2, of a first central chamber 39 as well as a second chamber 40 and a third chamber 41 which are adjacent to the first chamber at opposite sides.

Adjacent chambers among those mentioned above are separated from each other by partitions, generally indicated 42, which are preferably produced in one piece with the beam 2. Each partition 42 has an opening, advantageously a through-hole, for the passage of the corresponding half-shaft. Hydraulic sealing means are provided between adjacent chambers and the corresponding half-shaft in order to keep separate the lubrication media of the transmission elements contained in the chambers. Those sealing means advantageously comprise bushing elements, or the like, which are held fitted to the respective half-shafts 5, 6 and received in seats formed in the partitions 42 of the box-shaped casing. As a result, the lubrication in the central chamber 39, which is carried out, for example, with high-viscosity oil for gear systems (lubrication of the crown wheel and pinion, the reduction gear and the differential gear), can be kept distinct and separate from the lubrication of the lateral chambers 40, 41, which is carried out, for example, with low-viscosity oil which is typical for lubricating and cooling brake units. It is further possible to provide forced circulation of the lubrication oil, if necessary in particular applications, in one or more of the above-mentioned chambers.

In this manner, the invention achieves the objects set out and provides the above-mentioned advantages over the known solutions.

## Claims

1. An axle for vehicles, in particular for lift trucks, comprising a differential gear unit (7) having a crown wheel and pinion gear arrangement (8, 9) at the drive input in the differential gear unit, **characterized in that** it further comprises a reduction gear unit (14) which is kinematically interposed between the crown wheel and pinion gear arrangement and the differential gear unit.

2. An axle according to claim 1, wherein the reduction gear unit (14) is of the epicyclic type.

3. An axle according to claim 1 or claim 2, wherein the differential gear unit (7) and the reduction gear unit (14) are arranged in a central zone of the axle between the opposite longitudinal ends thereof.

4. An axle according to claim 2, wherein the reduction gear unit comprises a sun gear (18) which is coaxially connected to a hollow shaft (12), in which at least one of the transmission half-shafts (5, 6) is rotatingly received for the drive transmission to the respective wheel hub (3, 4) of the axle.

5. An axle according to any one or more of the preceding claims, comprising one brake unit (32) which acts on the corresponding transmission half-shaft (5, 6) for each wheel hub (3, 4).

6. An axle according to any one or more of the preceding claims, comprising a box-shaped central element (22) which constitutes the differential gear box, the element being extended into a portion which constitutes a satellite carrier (20) for the epicyclic reduction gear (14).

7. An axle according to claim 6, wherein the differential gear box and the satellite carrier portion (20) are produced in one piece as a single casting.

8. An axle according to any one or more of the preceding claims, comprising a box-shaped casing (2) which contains the transmission elements of the axle, a first central chamber (39) being defined in the casing and housing the differential gear (7) and reduction gear (14) units as well as the crown wheel (9) and pinion (8), and a second (40) and third (41) chamber being defined at opposite sides relative to the first chamber and each being able to house the corresponding brake unit (32) of the respective wheel hub (3, 4).

9. An axle according to claim 8, wherein the chambers (39, 40, 41) are divided by partitions (42) having openings for the passage of the transmission half-shafts (5, 6), hydraulic sealing means being provided between adjacent chambers and the corresponding transmission half-shaft in order to keep separate the lubrication media of the transmission elements which are housed in each of the chambers.

10. An axle according to claim 9, wherein the hydraulic sealing means comprise bushing elements which are fitted to the respective transmission half-shafts (5, 6) and which are received in seats formed in the box-shaped casing.

11. An axle according to claim 10, wherein the seats are through-holes which are produced in the dividing partitions which delimit adjacent chambers of the box-shaped casing.
